# FASCICULE DE BREVET EUROPEEN

(11) **EP 1 565 094 B1**
(45) Date de publication et mention de la délivrance du brevet: **19.03.2008**
(21) Numéro de dépôt: 03784171.5
(22) Date de dépôt: 05.08.2003
(51) Int. Cl.: A47J 31/40

(54) **DISPOSITIF POUR LA PREPARATION D UNE BOISSON**
VORRICHTUNG ZUR ZUBEREITUNG EINES GETRÄNKS
DEVICE FOR PREPARING A BEVERAGE

(30) Priorité: 06.08.2002 CH 20021367
(43) Date de publication de la demande: 24.08.2005
(73) Titulaire: Nestec S.A., 1800 Vevey (CH)
(72) Inventeur: HUG, Karl, CH-1184 Vinzel (CH); DENISART, Jean-Paul, CH-1093 La Conversion (CH); DENISART, Jean-Luc, CH-1096 Cully (CH)
(74) Mandataire: Ducreux, Marie
(86) Numéro de dépôt international: PCT/EP2003/008634
(87) Numéro de publication internationale: WO 2004/014205

(56) Documents cités:
- GB-A- 778 394
- US-A- 4 890 653

## Description

La présente invention concerne un dispositif pour la préparation d'une boisson, ledit dispositif ne comprenant pas de pompe.

Il existe déjà dans la technique des machines à café ne comprenant aucune pompe pour la préparation de la boisson. La demande de brevet WO 99/02081 concerne un tel système permettant de préparer une boisson à partir d'un chariot déplaçable. Ce système est basé sur le principe que le déplacement d'eau chaude est induit par une bouteille de gaz comprimé. L'inconvénient de ce dispositif est qu'il est lourd et cher. D'autre part, dans ce dispositif, l'eau et le gaz sous pression sont en contact permanent, d'ou une diffusion de gaz dans l'eau, donc une eau pétillante. Ceci a pour conséquence une altération du goût de la boisson, en l'occurence dans ce cas précis du café extrait. Un autre système connu est décrit dans le document GB 778 394 A.

Le but de la présente invention est de mettre à disposition du consommateur un dispositif relativement léger , peu onéreux et permettant de préparer des tasses de café ou autres avec des volumes bien définis, sans altération de goût.

La présente invention concerne un dispositif pour la préparation d'une boisson comme defini dans la revendication 1.

Par tête d'extraction dans la présente description, on entend, tout systéme, soit basé sur la solubilisation d'une matière, soit basée sur l'extraction, par exemple du thé, café et autres substances. Dans le cas d'une extraction, on utilise des capsules, par exemple des capsules ouvertes, du type capsule en papier filtre ou aussi des capsules faisant l'objet des brevets au nom de la demanderesse, à savoir EP 512'148 et EP 602'203. Les capsules peuvent contenir tout type de produit alimentaire soluble ou extractible, par exemple du café rôti et moulu, du café soluble, du cacao soluble, du thé, des substances deshydratées pour bouillons ou autres.

La chambre pour l'arrivée d'eau a un volume compris entre 10 et 1000 cc, de préférence entre 50 et 150 cc. Le volume de la chambre est pris en considération par rapport au volume de la tasse à préparer pour le consommateur.

Les moyens permettant de vider d'eau la chambre sont des moyens utilisant la pression du gaz pour vider ladite chambre. Ces moyens sont de préférence des moyens hydrauliques. Comme moyen hydraulique, on utilise un piston, déplacé par le gaz comprimé.

Les moyens permettant de remplir d'eau ladite chambre sont des moyens comme defini dans la revendication 1, de gravitation ou des moyens mécaniques. Par moyens de gravitation, on entend simplement que l'eau remplit la chambre par son poids et repousse par exemple le piston vers le haut. Par moyens mécaniques, on entend soit un ressort, soit un moteur, soit par voie manuelle.

Le gaz comprimé est choisi dans le groupe constitué par de l'air, du CO2 et du protoxyde d'azote.

Le réservoir d'eau est un réservoir d'eau chaude isolé thermiquement. On peut aussi prévoir dans une forme de réalisation que un système de chauffage entoure la chambre. Il est également possible de prévoir un système de chauffage entre la chambre et la tête d'extraction.

La chambre n'est pas critique quant à sa forme. De préférence, la chambre a une forme sensiblement cylindrique.

Un autre intérêt du dispositif selon l'invention est qu'il est pratiquement silencieux.

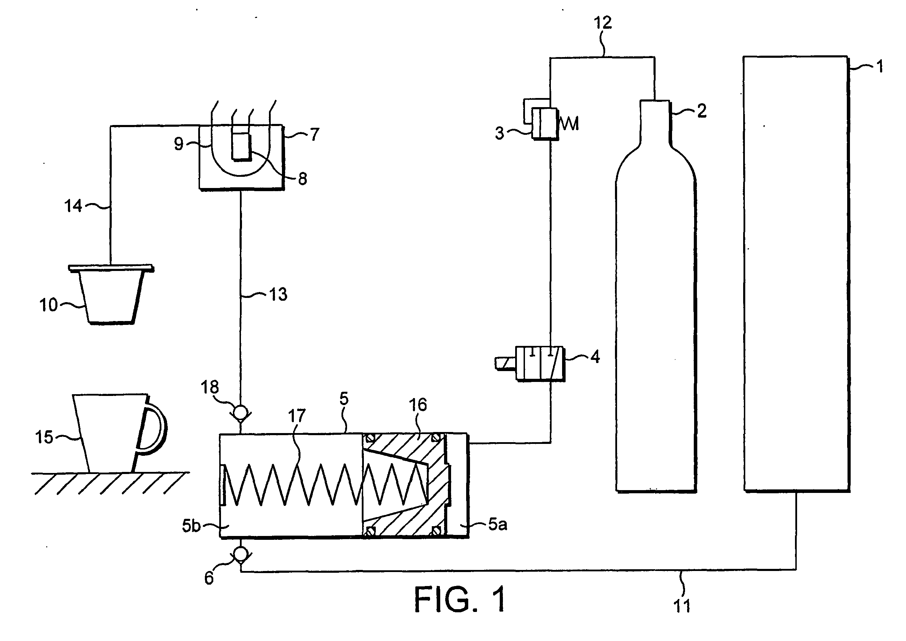

La suite de la description est faite en référence aux dessins sur lesquels
Fig. 1 est une représentation du dispositif dans une première forme de réalisation,
Fig. 2 à 5 sont des représentations schématiques du dispositif dans une seconde forme de réalisation et
Fig. 6 est une représentation schématique selon une troisième forme de réalisation.

Le dispositif comprend un réservoir d'eau (1), une chambre (5) reliée audit réservoir par la conduite (11), un système de chauffage (7), un réservoir (2) de gaz comprimé et une tête d'extraction (10). La chambre (5) comprend un piston (16) mu par un ressort (17). La chambre (5) a un côté (5a) pour l'arrivée du gaz comprimé et un côté (5b) pour l'entrée d'eau. Le réservoir (2) de gaz comprimé est relié par la conduite (12) au côté (5a) et ladite conduite comprend un détendeur (3) et une vanne (4). La vanne anti-retour (6) évite tout reflux d'eau de la chambre (5). La conduite (13) mène au système de chauffage comprenant un thermostat (8) et un corps de chauffe (9). La conduite (4) mène à la tête d'extraction.

Le dispositif fonctionne de la manière suivants :

Au moment où le consommateur veut se faire un café, la vanne (4) est ouverte et mise en communication avec l'air ambiant. Comme le côté (5a) se vide d'air, le ressort (17) se détend et aspire l'eau du réservoir d'eau (1) sur le côté (5b). Lorsque le côté (5b) est plein, la vanne (4) se met en position liaison avec le réservoir (2) de gaz comprimé : le gaz se détend grâce à (3) et déplace le piston (16) de manière à déplacer la masse d'eau dans le côté (5b). L'eau passe par la vanne anti-retour (18) dans le système de chauffage (7) et par la tête d'extraction (10). Le café arrive dans la tasse (15). La machine est ainsi prête pour l'extraction suivante.

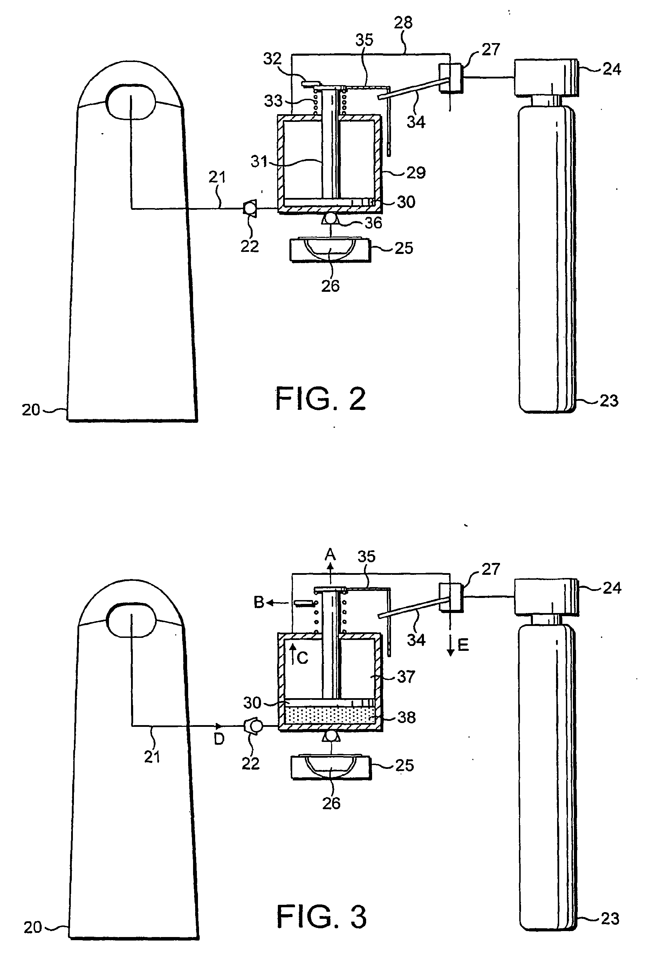

Le dispositif des figures 2 à 5 comprend un réservoir (20) d'eau chaude isolé thermiquement, une chambre (29) relié audit réservoir par la conduite (21), comprenant une vanne anti-retour (22), un réservoir de gaz comprimé (23) , avec détendeur (24), relié à la chambre (29) par la conduite (28). La vanne trois voies (27) permet d'introduire le gaz comprimé dans la chambre (29) ou de relier à la pression extérieure. La chambre (29) comprend un piston (30) avec sa tige (31), un déclencheur (35) de vanne. La gachette mécanique (32) bloque le piston en position comprimé du ressort (33). A la sortie de la chambre (29), on arrive sur la capsule à extraire (26) disposée dans le porte-cartouche (25).

Le dispositif fonctionne de la manière suivante :

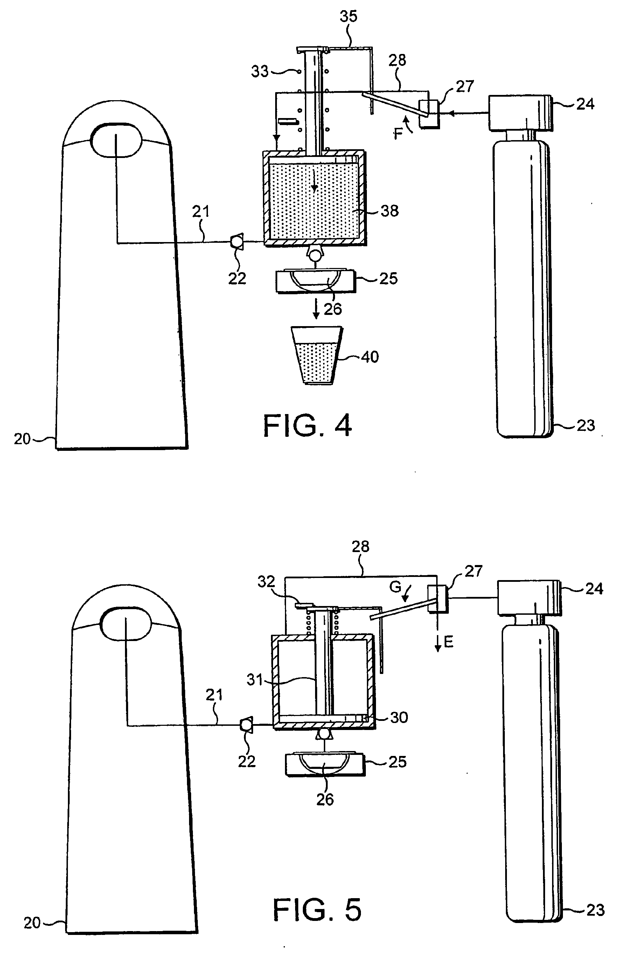

Lorsque le consommateur souhaite se faire un café, il dégage la gachette (32) dans le sens de la fléche B, ce qui a pour effet de laisser se détendre le ressort (33) (Fig. 3) :le piston (30) monte dans le sens de la fléche A. L'air présent en (37) sort selon la fléche C dans le conduite (28) et est évacuée par la vanne (27) en dehors (fléche E). L'eau du réservoir (20) est aspiré à travers la vanne (22) en (38). Lors de la montée du piston (30), le déclencheur de vanne (35) pousse la tige (34) de la vanne selon la fléche F jusqu'à ce que il n'y a plus d'air en (37) et on atteint un volume maximum pour (38). A ce moment là, la vanne (27) bascule pour laisser entrer le gaz comprimé par le détendeur (24) à travers la conduite (28) pour pousser le piston (30). Le volume d'eau chaude en (38) ouvre la vanne (36), arrive sur la capsule (26) et le café s'écoule dans la tasse (40). Lors de l'extraction, le piston tire vers le bas la tige (34) selon la fléche G. En fin de course du piston (Fig. 5) la vanne (27) met à nouveau à la pression atmosphérique le volume (37) et la gachette (32) rebloque le piston avec le ressort (33) comprimé. La machine est alors prête pour une nouvelle extraction. On peut prévoir un réservoir (20) de volume de l'ordre de 1 ou 2 litres. Le réservoir (23) de gaz comprimé a normalement un volume de l'ordre de ... 1. Le volume (38) correspond a un volume de tasse de l'ordre de 100 cc.

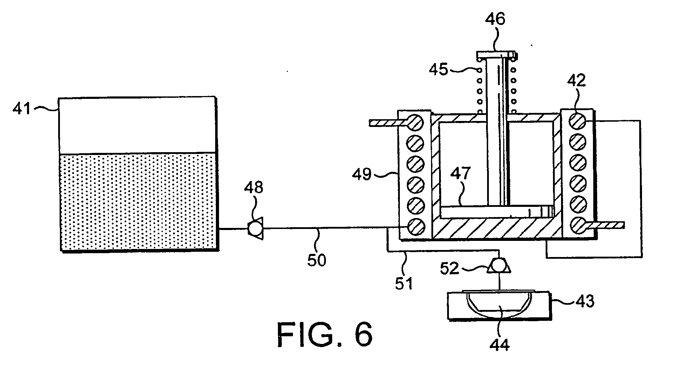

Dans la forme de réalisation de la figure 6, au lieu d'avoir de l'eau chaude, on prévoit un réservoir (41) contenant de l'eau froide et un corps de chauffe (42). On a toujours une chambre (49) avec un piston (47) , une tige de piston (46), un ressort (45), une capsule (44) et un porte-cartouche (43).

Le fonctionnement est le même que précédemment, sauf que le corps de chauffe (42) va chauffer l'eau froide arrivant par la conduite (50), à travers la vanne (48) et arrivant dans la chambre (49). Lorsque le piston est en position haute, l'air comprimé (non représenté) pousse l'eau chaude dans la conduite (51) à travers la vanne (52) sur la capsule (44). On récupère la café dans une tasse en dessous.

## Revendications

1. Dispositif pour la préparation d'une boisson comprenant
- un réservoir d'eau
- une chambre (29) reliée audit réservoir pour l'arrivée d'eau,
- des moyens permettant de vider d'eau ladite chambre comprenant un piston (30) avec une tige (31) dans la chambre,
- des moyens permettant de remplir d'eau ladite chambre comprenant un ressort (17) qui se détend pour la rétraction du piston (30) dans la chambre (29),
- un réservoir de gaz comprimé avec vanne pour comprimer le piston dans la chambre pour vider ladite chambre et
- une conduite emmenant l'eau depuis ladite chambre sur une tête d'extraction, **caractérisé en ce que**
la vanne est une vanne trois voie (27) configurée pour prendre une première position pour connecter la même chambre à la pression externe et une seconde position pour permettre au gaz d'être introduit dans la chambre (29) et **en ce que** la vanne est déplacée d'une première à une seconde position en fonction de l'état de détente du ressort.

2. Dispositif selon la revendication 1, **caractérisé en ce que** la chambre pour l'arrivée d'eau a un volume compris entre 10 et 1000 cc, de préférence entre 50 et 150 cc.

3. Dispositif selon l'une des revendications 1 ou 2, **caractérisé en ce que** les moyens permettant de vider d'eau la chambre sont des moyens utilisant la pression du gaz pour vider ladite chambre.

4. Dispositif selon l'une des revendications 1 à 3, **caractérisé en ce que** les moyens permettant de remplir d'eau ladite chambre sont des moyens de gravitation ou des moyens mécaniques.

5. Dispositif selon la revendication 4, **caractérisé en ce que** le gaz est choisi dans le groupe constitué par de l'air, du CO2 , du protoxyde d'azote.

6. Dispositif selon l'une des revendications 1 à 5, **caractérisé en ce que** la tête d'extraction est une tête pour des capsules préposées en papier filtre ou des capsules fermées.

7. Dispositif selon l'une des revendications 1 à 6, **caractérisé en ce que** le réservoir d'eau est un réservoir d'eau chaude isolé thermiquement.

8. Dispositif selon l'une des revendications 1 à 6, **caractérisé en ce qu'**il comprend un sytème de chauffage entourant la chambre.

9. Dispositif selon l'une des revendications 1 à 6, **caractérisé en ce qu'**il comprend un système de chauffage entre la chambre et la tête d'extraction.

10. Dispositif selon l'une des revendications 1 à 9, **caractérisé en ce que** la chambre est de forme sensiblement cylindrique.

## Claims

1. Device for preparing a beverage comprising:
- a water reservoir
- a chamber (29) connected to said reservoir for the inflow of water,
- means for emptying water from said chamber comprising a piston (30) with a rod (31) in the chamber,
- means for filling said chamber with water comprising a spring (17) that slackens in order to retract the piston (30) in the chamber (29),
- a compressed gas reservoir with valve for compressing the piston in the chamber for emptying said chamber and
- a pipe bringing water from said chamber on an extraction head, **characterized in that** the valve is a three-way valve (27) configured so as to take up a first position in order to connect the same chamber to outside pressure and a second position that allows gas to be introduced into the chamber (29) and **in that** the valve is moved from a first to a second position according to the state of slackening of the spring.

2. Device according to claim 1, **characterized in that** the chamber for the inflow of water has a volume of between 10 and 1000 cc, preferably between 50 and 150 cc.

3. Device according to either of claims 1 or 2, **characterized in that** the means for emptying water from the chamber are means using gas pressure to empty said chamber.

4. Device according to one of claims 1 to 3, **characterized in that** the means for filling said chamber with water are gravitational means or mechanical means.

5. Device according to claim 4, **characterized in that** the gas is chosen from the group consisting of air, CO₂ and nitrous oxide.

6. Device according to one of claims 1 to 5, **characterized in that** the extraction head is a head for capsules predosed into a filter paper or closed capsules.

7. Device according to one of claims 1 to 6, **characterized in that** the water reservoir is a thermally insulated hot water reservoir.

8. Device according to one of claims 1 to 6, **characterized in that** it includes a heating system surrounding the chamber.

9. Device according to one of claims 1 to 6, **characterized in that** it includes a heating system between the chamber and the extraction head.

10. Device according to one of claims 1 to 9, **characterized in that** the chamber has a substantially cylindrical shape.

## Patentansprüche

1. Vorrichtung zur Zubereitung eines Getränks, umfassend
- einen Wasserbehälter,
- eine mit dem Behälter verbundene Kammer (29) für die Wasserzufuhr,
- Mittel zur Entleerung des Wassers aus der Kammer, umfassend einen Kolben (30) mit einer Stange (31) in der Kammer,
- Mittel zum Befüllen der Kammer mit Wasser,
umfassend eine Feder (17), die sich bei dem Rückzug des Kolbens (30) in der Kammer (29) entspannt,
- einen Behälter mit komprimiertem Gas mit einem Ventil zum Komprimieren des Kolbens, um die Kammer zu entleeren, und
- eine Leitung, die das Wasser aus der Kammer zu einem Extraktionskopf abführt, **dadurch gekennzeichnet, dass** das Ventil ein Dreiwegeventil (27) ist, das dafür ausgelegt ist, eine erste Stellung einzunehmen, um die Kammer mit dem Außendruck zu verbinden, und eine zweite Stellung, um die Einführung von Gas in die Kammer (29) zu gestatten, und dass das Ventil in Abhängigkeit von dem Entspannungszustand der Feder von einer ersten Stellung in eine zweite Stellung bewegt wird.

2. Vorrichtung nach Anspruch 1, **dadurch gekennzeichnet, dass** die Kammer für die Wasserzufuhr ein Volumen zwischen 10 und 1000 cm³, vorzugsweise zwischen 50 und 150 cm³ besitzt.

3. Vorrichtung nach einem der Ansprüche 1 oder 2, **dadurch gekennzeichnet, dass** die Mittel zum Entleeren des Wassers aus der Kammer Mittel sind, die den Druck des Gases zum Entleeren der Kammer benutzen.

4. Vorrichtung nach einem der Ansprüche 1 bis 3, **dadurch gekennzeichnet, dass** die Mittel zum Befüllen der Kammer mit Wasser Schwerkraftmittel oder mechanische Mittel sind.

5. Vorrichtung nach Anspruch 4, **dadurch gekennzeichnet, dass** das Gas aus der Gruppe ausgewählt ist, die aus Luft, CO₂, Stickstoffprotoxid besteht.

6. Vorrichtung nach einem der Ansprüche 1 bis 5, **dadurch gekennzeichnet, dass** der Extraktionskopf ein Kopf für vordosierte Kapseln aus Filterpapier oder geschlossene Kapseln ist.

7. Vorrichtung nach einem der Ansprüche 1 bis 6, **dadurch gekennzeichnet, dass** der Wasserbehälter ein wärmeisolierter Heißwasserbehälter ist.

8. Vorrichtung nach einem der Ansprüche 1 bis 6, **dadurch gekennzeichnet, dass** sie ein die Kammer umgebendes Heizsystem umfasst.

9. Vorrichtung nach einem der Ansprüche 1 bis 6, **dadurch gekennzeichnet, dass** sie ein Heizsystem zwischen der Kammer und dem Extraktionskopf umfasst.

10. Vorrichtung nach einem der Ansprüche 1 bis 9, **dadurch gekennzeichnet, dass** die Kammer von im Wesentlichen zylindrischer Form ist.
